# FASCICULE DE BREVET EUROPEEN

(11) **EP 2 096 348 B1**
(45) Date de publication et mention de la délivrance du brevet: **26.01.2011**
(21) Numéro de dépôt: 09152417.3
(22) Date de dépôt: 09.02.2009
(51) Int. Cl.: F01N 13/14, F01N 13/16

(54) **Conduit d'échappement, procédé de fabrication de ce conduit et véhicule équipé de ce conduit**
Auspuffleitung, Herstellungsverfahren dieser Leitung und mit dieser Leitung ausgestattetes Fahrzeug
Exhaust duct, manufacturing method of this duct and vehicle equipped with this duct

(30) Priorité: 29.02.2008 FR 0851347
(43) Date de publication de la demande: 02.09.2009
(73) Titulaire: Peugeot Citroën Automobiles SA, 78140 Vélizy-Villacoublay (FR)
(72) Inventeur: George, Aubert, 78750 Mareil-Marly (FR); Dekerle, Gautier, 91300 Massy (FR)
(74) Mandataire: Ménès, Catherine

(56) Documents cités:
- EP-A- 0 374 603
- EP-A- 1 386 898
- DE-A1- 4 038 979
- DE-A1- 19 705 490
- US-A1- 2003 106 311
- US-A1- 2007 151 233

## Description

L'invention concerne un conduit d'échappement et un procédé de fabrication de ce conduit d'échappement.

Le déposant connaît des conduits d'échappement de véhicule comportant une enveloppe métallique définissant le pourtour extérieur du conduit d'échappement, cette enveloppe métallique présentant une face extérieure et une face intérieure tournée vers l'intérieur du conduit d'échappement et comprenant une zone à protéger, et un protecteur thermique appliqué sur la face intérieure de la zone de cette enveloppe métallique à protéger.

On définit ici par l'expression « tenue thermique à Tₜₜ» ou « tenue thermique supérieure à Tₜₜ » la capacité d'un matériau à ne subir aucune modification de ses propriétés physiques ou chimiques tant que la température de ce matériau reste inférieure à la température Tₜₜ. En particulier, les caractéristiques mécaniques de ce matériau dont notamment sa résistance mécanique ne sont pas modifiées tant que la température de ce matériau ne dépasse pas la température Tₜₜ.

On définit également par le terme « matériau réfractaire », un matériau solide dont la tenue thermique est supérieure à 1 100 °C.

Les protecteurs thermiques connus installés à l'intérieur des conduits d'échappement ont, par exemple, pour vocation de limiter l'oxydation ou les modifications de l'apparence extérieure du conduit d'échappement. Par contre, ces protecteurs thermiques connus s'avèrent inefficaces pour protéger l'enveloppe métallique contre de brusques variations de la température des gaz d'échappement. Il est par ailleurs connu au travers du document US2003/0106311 un collecteur d'échappement présentant une enveloppe métallique et une protection interne comportant une couche isolante formée d'un matériau de type céramique, et une couche faisant joint entre l'enveloppe et la couche isolante, formée d'un autre matériau de type céramique.

Ces brusques variations de la température des gaz d'échappement sont, par exemple, causées par l'inflammation de gouttes d'hydrocarbure ou de suie à l'intérieur du conduit d'échappement. Ceci provoque une brusque augmentation de la température sur, généralement, une durée assez courte, c'est-à-dire une durée inférieure à 10 minutes, et, typiquement, inférieure à 1 minute. Par contre, l'accroissement de température pendant cette durée peut être important. Par exemple, la température des gaz d'échappement peut passer d'une température de moins de 600 °C à une température pouvant atteindre 1 400 °C.

De telles variations de la température des gaz d'échappement provoquent une usure mécanique accélérée de l'enveloppe métallique du conduit d'échappement. De plus, si la température de l'enveloppe métallique s'élève trop, cela peut conduire à la détérioration de pièces situées à proximité immédiate du conduit d'échappement telles que des pièces en caoutchouc ou en matériau plastique.

L'invention vise donc à limiter l'usure mécanique de l'enveloppe métallique du conduit d'échappement causée par de telles variations de la température des gaz d'échappement.

Elle a donc pour objet un conduit d'échappement d'un véhicule dans lequel le protecteur thermique comprend une couche en matériau réfractaire recouvrant la zone à protéger, ce matériau réfractaire ayant une capacité thermique massique strictement supérieure à celle de l'enveloppe métallique.

Dans le conduit d'échappement ci-dessus, en cas de brusque augmentation de la température des gaz d'échappement d'une température T_{N} vers une température de surchauffe T_{F}, la température d'une zone non protégée de l'enveloppe métallique croît progressivement vers la température T_{F}. La température T_{F} est atteinte après un intervalle de temps Δt₁ dans cette zone non protégée. En même temps, la température de la zone à protéger de l'enveloppe métallique croît aussi progressivement vers cette température T_{F}. La température T_{F} est atteinte après un intervalle de temps Δt₂ dans cette zone à protéger. L'intervalle Δt₂ est plus long que l'intervalle Δt₁. En effet, la capacité thermique massique ou chaleur massique du matériau réfractaire est supérieure à celle de l'enveloppe métallique, ce qui rend la progression de la chaleur au travers de ce matériau plus lente que dans la zone non protégée. Ainsi, l'augmentation de la température de l'enveloppe métallique dans la zone à protéger est moins brutale que dans la zone non protégée.

De plus, si la température des gaz d'échappement augmente uniquement de façon temporaire pendant un intervalle de temps inférieur à l'intervalle Δt₂, la température atteinte au niveau de la zone à protéger reste toujours inférieure à celle mesurée au même moment sur la zone non protégée de l'enveloppe métallique. Ainsi, l'amplitude des variations de température de l'enveloppe métallique au niveau de la zone à protéger est moindre que celle observée sur la zone non protégée.

Les modes de réalisation de ce conduit d'échappement peuvent comporter une ou plusieurs des caractéristiques suivantes :
- le protecteur thermique comprend un joint interposé entre l'enveloppe métallique et la couche en matériau réfractaire pour empêcher toute infiltration de gaz s'échappement entre cette couche en matériau réfractaire et la face intérieure de la zone à protéger de l'enveloppe métallique ;
- le joint est une nappe en matériau isolant qui recouvre toute la zone à protéger et dont la conductivité thermique est strictement inférieure à celles de l'enveloppe métallique et du matériau réfractaire ;
- le matériau isolant est un matériau polycristallin ou céramique sous forme de matière vitreuse amorphe
- la couche en matériau réfractaire est coincée entre la face intérieure de l'enveloppe métallique et un revers de cette enveloppe métallique ;
- le matériau réfractaire est du carbure de silicium ou de la fibre de roche.
- la zone à protéger est uniquement située dans un coude ou dans un entonnoir du conduit d'échappement ; l'enveloppe métallique comprend également au moins une zone non protégée située dans un endroit où les parois de l'enveloppe métallique sont parallèles à la direction d'écoulement des gaz s'échappement, et le protecteur thermique recouvre toute la zone à protéger sans recouvrir complètement la zone non protégée ;
- la couche en matériau réfractaire est directement exposée aux gaz s'échappement ;
- la capacité thermique massique du matériau réfractaire est supérieure à 700 J.Kg⁻¹.K⁻¹.

Ces modes de réalisation du conduit d'échappement présentent en outre les avantages suivants :
- la présence d'un joint interposé entre l'enveloppe métallique et la couche en matériau réfractaire permet d'augmenter l'efficacité du protecteur thermique,
- la réalisation de ce joint sous la forme d'une nappe en matériau isolant permet d'augmenter encore plus l'efficacité du protecteur thermique,
- pincer le protecteur thermique entre l'enveloppe métallique et un revers de cette enveloppe métallique simplifie la fixation du protecteur thermique à l'intérieur du conduit d'échappement,
- utiliser le carbure de silicium ou une fibre de roche en tant que matériau réfractaire simplifie et limite les coûts de fabrication du conduit d'échappement,
- utiliser le protecteur thermique uniquement dans des coudes ou entonnoirs du conduit d'échappement en laissant d'autres zones du conduit d'échappement dépourvues de protection limite la quantité de matériau réfractaire utilisée sans accélérer sensiblement l'usure du conduit d'échappement en réponse aux brusques variations de température.

L'invention a également pour objet un procédé de fabrication du conduit d'échappement ci-dessus. Ce procédé comprend le dimensionnement de l'épaisseur de la couche en matériau réfractaire en fonction :
- d'une durée maximale de surchauffe contre laquelle on souhaite protéger la zone à protéger de l'enveloppe métallique,
- d'un seuil prédéterminé que la température de l'enveloppe métallique ne doit pas dépasser dans la zone à protéger à l'issue de ladite durée maximale de surchauffe, et
- d'un débit maximal des gaz d'échappement dans le conduit d'échappement.

L'invention a également pour objet un véhicule automobile comprenant le conduit d'échappement ci-dessus.

L'invention sera mieux comprise à la lecture de la description qui va suivre donnée uniquement à titre d'exemple non limitatif et faite en se référant aux dessins sur lesquels :
- la figure 1 est une illustration schématique et en coupe longitudinale d'une portion d'un conduit d'échappement équipé d'un protecteur thermique,
- la figure 2 est un organigramme d'un procédé de fabrication du protecteur thermique du conduit d'échappement de la figure 1,
- la figure 3 est un graphe illustrant les variations de température de différentes zones du conduit d'échappement de la figure 1 en cas de brusques variations de température des gaz d'échappement,
- la figure 4 est une illustration schématique en coupe longitudinale d'un autre mode de réalisation d'un conduit d'échappement équipé d'un protecteur thermique.

Dans ces figures, les mêmes références sont utilisées pour désigner les mêmes éléments.

Dans la suite de cette description, les caractéristiques et fonctions bien connues de l'homme du métier ne sont pas décrites en détail.

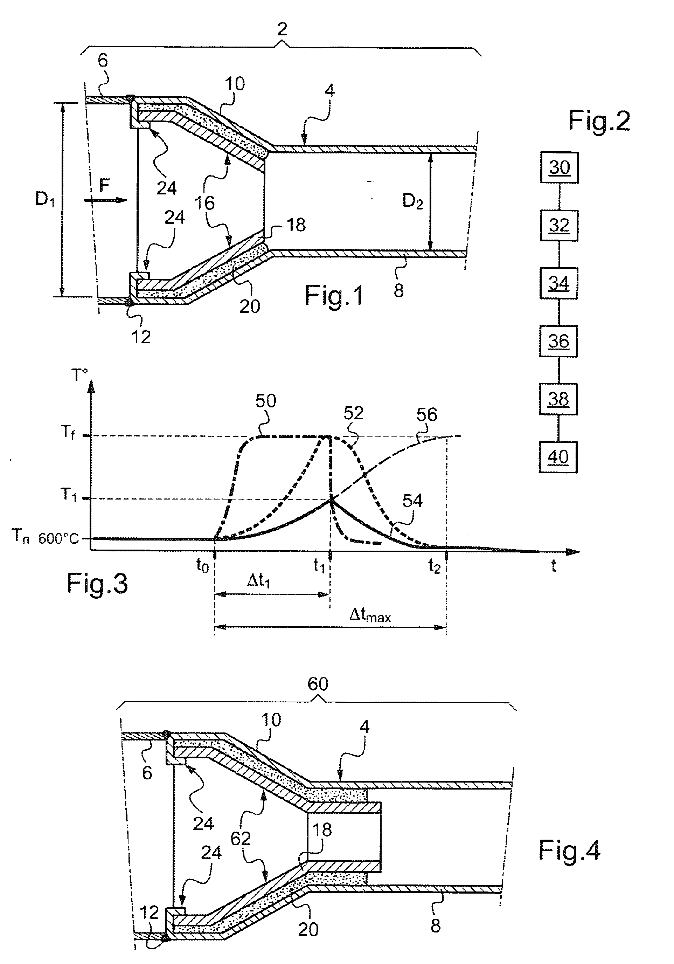

La figure 1 représente une portion conique d'un conduit d'échappement 2 d'un véhicule. Par exemple, le véhicule est un véhicule routier tel qu'une automobile ou encore un motocycle. Le conduit 2 est fluidiquement raccordé à la sortie d'un moteur à combustion du véhicule pour collecter et expulser à l'extérieur du véhicule les gaz d'échappement produits par ce moteur.

Le conduit 2 comprend une enveloppe métallique 4 qui définit le pourtour extérieur du conduit 2. Cette enveloppe présente une face extérieure et une face intérieure tournée vers l'intérieur du conduit d'échappement où circulent les gaz d'échappement. Par exemple, l'enveloppe 4 est réalisée en acier.

Cette enveloppe 4 se compose d'un tube métallique amont 6 et d'un tube métallique aval 8. Ici, l'amont et l'aval sont définis par rapport à la direction F d'écoulement des gaz d'échappement à l'intérieur du conduit 2. Cette direction F est représentée par une flèche sur la figure 1.

Le tube 6 a un diamètre intérieur D₁ strictement supérieur au diamètre intérieur D₂ du tube 8. Les tubes 6 et 8 sont des cylindres de révolution ayant une section transversale circulaire.

L'enveloppe 4 comprend également un cône 10 propre à raccorder fluidiquement une extrémité du tube 6 à une extrémité du tube 8. Ici, le cône 10 est venu de matière avec le tube 8 et forme donc avec ce tube 8 un seul bloc. Par contre, l'extrémité du tube 6 est raboutée à l'extrémité de la section 10 à l'aide d'un cordon de soudure 12.

L'épaisseur de l'enveloppe métallique est par exemple constante et supérieure à 0,5 mm et de préférence supérieure à 1 mm.

Le cône 10 de l'enveloppe 4 forme une zone à protéger. En effet, dans cette zone la direction F d'écoulement des gaz d'échappement n'est pas parallèle à la face intérieure du cône 10. Les gaz d'échappement heurtent donc la face intérieure du cône 10 ce qui facilite les échanges de chaleur entre les gaz d'échappement et le cône 10.

A l'inverse, la face intérieure des tubes 6 et 8 est parallèle à la direction F d'écoulement des gaz d'échappement. Les échanges de chaleur entre les parois de ces tubes et les gaz d'échappement sont donc moins efficaces qu'au niveau du cône 10. Par conséquent, les parois des tubes 6 et 8 constituent des zones de l'enveloppe 4 moins soumises aux brusques variations de température. Ici, ces zones de l'enveloppe 4 ne sont donc pas protégées.

Pour protéger le cône 10 contre les brusques variations de température des gaz d'échappement, un protecteur thermique 16 est directement appliqué sur la face intérieure du cône 10.

Ce protecteur thermique 16 comprend une couche en matériau réfractaire 18 qui recouvre l'ensemble de la zone à protéger. Le matériau 18 est choisi pour avoir une tenue thermique au moins supérieure à 1 100 °C et, de préférence, supérieure à 1 400 °C. De plus, de façon à ralentir la propagation de la chaleur vers le cône 10, cette couche 18 est réalisée dans un matériau réfractaire dont la capacité thermique massique est strictement supérieure à la capacité thermique massique de l'enveloppe 4.

On rappelle que la capacité thermique massique, également connue sous l'expression de « chaleur massique » ou « specific heat» en anglais, représente la quantité d'énergie à apporter à une unité de masse du matériau pour accroître sa température de 1 °C. Cette capacité thermique massique c est exprimée en joule/kilogramme/Kelvin (J.Kg⁻¹.K⁻¹ ).

Ici, le matériau réfractaire choisi présente une capacité thermique massique c supérieure à 700 J.Kg⁻¹.K⁻¹ et, de préférence, supérieure à 1 050 J.Kg⁻¹.K⁻¹ ou 1 500 J.Kg⁻¹.K⁻¹. Ici, les valeurs de la capacité thermique massique sont données à la température ambiante c'est-à-dire pour une température de 20 C.

De préférence, le matériau réfractaire choisi doit aussi être un bon isolant thermique. A cet effet, la conductivité thermique du matériau 18 est choisie aussi petite que possible. Par exemple, la conductivité thermique du matériau 18 est inférieure à 500 W.m⁻¹.K⁻¹ et, de préférence, inférieure à 150 W.m⁻¹.K⁻¹.

Un grand nombre de matériaux peuvent convenir tels que des céramiques. On rappelle qu'une céramique est un matériau solide tel qu'un oxyde, un nitrure ou un nitrure-oxyde de métal ou d'un non-métal. Les céramiques sont généralement obtenues par un procédé mettant en oeuvre une étape de cuisson ou de dépôt sous forme vapeur.

Ici, le matériau réfractaire utilisé est du carbure de silicium ou de la fibre de roche.

La face intérieure de la couche 18 est directement exposée au gaz d'échappement. La face extérieure de la couche 18 est tournée vers la face intérieure du cône 10.

Le protecteur thermique 16 comprend également une nappe 20 d'isolant interposée entre la couche 18 et le cône 10. La nappe 20 est directement en contact, d'un côté, avec la face extérieure de la couche 18 et, de l'autre côté, avec la face intérieure du cône 10. Cette nappe 20 est réalisée dans un matériau thermique isolant, c'est-à-dire dont la conductivité thermique est inférieure à 10 W.m⁻¹.K⁻¹ et, de préférence, inférieure à 1 W.m⁻¹.K⁻¹. Par exemple, cette nappe 20 est réalisée en matériau polycristallin ou céramique sous forme de matière vitreuse amorphe, c'est-à-dire dépourvue de structure cristalline. Ici, la nappe 20 est réalisée en fibre de verre.

La nappe 20 recouvre la totalité de la zone à protéger de l'enveloppe 4. Dans ces conditions, elle forme un joint propre à empêcher l'infiltration de gaz d'échappement entre la face extérieure de la couche 18 et la face intérieure du cône 10. De plus, le matériau utilisé pour la nappe 20 se présente sous la forme d'une matière molle, telle qu'une mousse, ayant un faible module de Young. Par faible module de Young, on entend un module de Young inférieur à 5 000 MPa. Ainsi, la nappe 20 permet également de maintenir le contact thermique entre la couche 18 et l'enveloppe métallique. Ceci est rendu d'autant plus nécessaire que le matériau réfractaire est un matériau solide.

Le matériau utilisé pour la nappe 20 présente également une tenue thermique supérieure à 1 100 °C et, de préférence, supérieure à 1 400 °C.

La nappe 20 est rigidement fixée sur la face extérieure de la couche 18.

Enfin, de manière à fixer sans aucun degré de liberté le protecteur thermique 16 à l'intérieur du cône 10, l'extrémité de plus grand diamètre du cône 10 forme un revers 24 qui se replie sur un bord du protecteur thermique 16. L'extrémité de plus grand diamètre du protecteur thermique 16 est pincée entre ce revers 24 et la face intérieure du cône 10 de sorte qu'il est maintenu en place sans aucun degré de liberté.

Le procédé de fabrication du conduit d'échappement 2 va maintenant être décrit en regard du procédé de la figure 2.

Initialement, lors d'une étape 30, l'épaisseur de la couche 18 est dimensionnée en fonction :

- d'une durée maximale Δtₘₐₓ de surchauffe contre laquelle on souhaite protéger la zone à protéger,

- d'un seuil S₁ de température qui ne doit pas être dépassé dans la zone à protéger en cas d'échauffement brusque pendant une durée maximale Δtₘₐₓ, et

- d'un débit Fₘₐₓ des gaz s'échappement dans le conduit pendant la durée Δtₘₐₓ.

En tenant compte de ces différents paramètres, il est possible à l'aide d'un modèle numérique du conduit d'échappement ou à l'aide d'expérimentation de déterminer une épaisseur e pour la couche 18 de manière à ce que la température atteinte par la zone à protéger après une surchauffe de durée Δtₘₐₓ ne dépasse pas le seuil S₁. Par exemple, Δtₘₐₓ est choisie inférieure à dix minutes et, de préférence, inférieur à une minute. Le seuil S₁ est choisi inférieur à 1 400 °C et, de préférence, strictement inférieur à 1 100 °C.

Le débit maximal Fₘₐₓ est donné par les caractéristiques du moteur à combustion libérant les gaz d'échappement dans le conduit 2.

Une fois le dimensionnement de l'épaisseur de la couche 18 réalisé, cette couche 18 est fabriquée lors d'une étape 32.

Ensuite, lors d'une étape 34, la couche 18 est recouverte de la nappe 20.

Le protecteur thermique ainsi formé est alors enfilé dans le cône 10, lors d'une étape 36.

Lors d'une étape 38, le revers 24 est formé de manière à maintenir sans aucun degré de liberté le protecteur thermique 16 à l'intérieur du cône 10.

Enfin, lors d'une étape 40, le tube 6 est rabouté à l'extrémité de plus grand diamètre du cône 10 à l'aide du cordon de soudure 12.

Le fonctionnement du protecteur thermique 16 va maintenant être décrit en regard du graphe de la figure 3 dans le cas particulier d'une brusque augmentation de la température des gaz d'échappement d'une température nominale Tₙ à une température de surchauffe T_{f} pendant une durée Δt₁.

Les axes des abscisses et des ordonnées du graphe représentent, respectivement, le temps et la température en °C.

Une courbe 50 représente l'évolution de la température des gaz d'échappement à l'intérieur du conduit 2 en fonction du temps. Cette courbe croît brusquement de la température Tₙ à la température T_{f} à l'instant to. De l'instant to à l'instant t₁, la température des gaz d'échappement est supposée quasiment constante et égale à la température T_{f}. L'intervalle de temps entre les instants t₀ et t₁ est égal à l'intervalle Δt₁.

A l'instant t₁, la température des gaz d'échappement décroît brusquement pour revenir à la température nominale Tₙ.

Une courbe 52 représente l'évolution de la température de l'enveloppe métallique 4 dans une zone non protégée par le protecteur thermique 16. Cette zone non protégée est par exemple le tube 6 ou 8.

Avant l'instant t₀, la température de la zone non protégée est égale à la température nominale Tₙ.

En réponse à la brusque augmentation de la température des gaz d'échappement, à partir de l'instant t₀, la température de la zone non protégée commence à croître. La température de la zone non protégée atteint ici la température T_{f} avant la fin de l'intervalle Δt₁.

Ensuite, à partir de l'instant t₁, la température de la zone non protégée décroît pour revenir, à l'instant t₂, à la température nominale. Cette décroissance de la température à partir de l'instant t₁ est causée par la chute de la température des gaz d'échappement à l'intérieur du conduit 2.

Enfin, une courbe 54 représente l'évolution de la température du cône 10. Cette température est égale à la température nominale avant l'instant t₀. A l'instant t₀, cette température commence à croître. A la fin de l'intervalle Δt₁, la température T₁ atteinte par le cône 10 est strictement inférieure à la température T_{f} si l'intervalle Δt₁ est strictement inférieur à l'intervalle Δtₘₐₓ. En effet, étant donné que la capacité thermique massique de la couche 18 est strictement supérieure à celle de l'enveloppe 4, cela ralentit la vitesse à laquelle la température du cône 10 augmente. Ainsi, à l'issue de l'intervalle Δt₁, le cône 10 n'a pas atteint la température T_{f}. A partir de cet instant t₁, la température du cône 10 décroît puisque le protecteur thermique se refroidit grâce aux gaz d'échappement qui ont une température inférieure à celle du protecteur 16. En d'autres termes, la couche 18 emmagasine de l'énergie thermique pendant l'intervalle Δt₁ puis la restitue à la fin de cet intervalle en partie aux gaz d'échappement. Dès lors, cette quantité d'énergie thermique n'atteint jamais le cône 10 en totalité ce qui limite l'élévation de température de ce cône 10.

On a également représenté sur la figure 3, par une ligne en pointillés 56, l'augmentation de la température du cône 10 si la durée de la surchauffe était égale à l'intervalle Δtₘₐₓ. Cette courbe en pointillés montre que la température T_{f} ne peut être atteinte au niveau du cône 10 que si l'augmentation de la température des gaz d'échappement à l'intérieur du conduit 2 dure plus longtemps que l'intervalle Δtₘₐₓ.

Le protecteur thermique 16 permet donc de ralentir l'augmentation de la température du cône 10, et de limiter l'amplitude des variations de température du cône 10 si celles-ci ont une durée inférieure à l'intervalle Δtₘₐₓ.

La figure 4 représente un autre mode de réalisation d'un conduit d'échappement 60. Ce conduit 60 est identique au conduit 2 à l'exception du protecteur thermique 16 qui est remplacé par un protecteur thermique 62. Le protecteur thermique 62 est identique au protecteur thermique 16 à l'exception que son extrémité de plus petit diamètre se prolonge à l'intérieur du tube 8 de l'enveloppe métallique 4. Ainsi ce protecteur thermique 62 protège non seulement le cône 10 mais également une partie du tube 8.

De nombreux autres modes de réalisation sont possibles. Par exemple, le protecteur thermique peut être monopièce comme illustré ici en regard des figures 1 et 4 ou multi-pièces. Dans le cas où le protecteur thermique est multipièce, ces pièces peuvent être juxtaposées les unes aux autres ou séparées les unes des autres par des intervalles dans lesquels l'enveloppe métallique est directement exposée aux gaz d'échappement.

Le protecteur thermique peut recouvrir la totalité de la face intérieure de l'enveloppe métallique.

La forme de la face intérieure du protecteur thermique peut être modifiée de façon à favoriser, par exemple, l'écoulement des gaz s'échappement ou de manière à accroître l'échange thermique entre les gaz s'échappement et la couche 18 ou encore de manière à homogénéiser le mélange gazeux circulant à l'intérieur du conduit 2. L'homogénéisation du mélange gazeux aura un intérêt tout particulier lorsqu'un additif ou du carburant est injecté dans les gaz s'échappement. Une telle homogénéisation du mélange gazeux formant les gaz s'échappement permet de décroître les niveaux d'émission polluante.

## Revendications

1. Conduit d'échappement, ce conduit comprenant :
- une enveloppe métallique (4) définissant le pourtour extérieur du conduit d'échappement, cette enveloppe métallique présentant une face extérieure et une face intérieure tournée vers l'intérieur du conduit d'échappement et comprenant une zone (10) à protéger, et
- un protecteur thermique (16 ; 62) appliqué sur la face intérieure de la zone (10) de cette enveloppe métallique à protéger,
ledit protecteur thermique (16 ; 62) comprenant une couche (18) en matériau réfractaire recouvrant la zone à protéger, ce matériau réfractaire ayant une capacité thermique massique strictement supérieure à celle de l'enveloppe métallique et le protecteur thermique (16 ; 62) comprenant un joint (20) interposé entre l'enveloppe métallique (4) et la couche (18) en matériau réfractaire pour empêcher toute infiltration de gaz d'échappement entre cette couche en matériau réfractaire et la face intérieure de la zone à protéger de l'enveloppe métallique,
**caractérisé en ce que** :
- la zone (10) à protéger est uniquement située dans un coude ou dans un entonnoir du conduit d'échappement,
- l'enveloppe métallique comprend également au moins une zone (6, 8) non protégée située dans un endroit où les parois de l'enveloppe métallique sont parallèles à la direction d'écoulement des gaz d'échappement, et
- le protecteur thermique (16) recouvre toute la zone à protéger sans recouvrir complètement la zone non protégée.

2. Conduit selon la revendication 1, dans lequel le joint (20) est une nappe en matériau isolant qui recouvre toute la zone à protéger et dont la conductivité thermique est strictement inférieure à celles de l'enveloppe métallique et du matériau réfractaire.

3. Conduit selon la revendication 2, dans lequel le matériau isolant est un matériau polycristallin ou céramique sous forme de matière vitreuse amorphe.

4. Conduit selon l'une quelconque des revendications précédentes, dans ,lequel la couche (18) en matériau réfractaire est coincée entre la face intérieure de l'enveloppe métallique (4) et un revers (24) de cette enveloppe métallique.

5. Conduit selon l'une quelconque des revendications précédentes, dans lequel le matériau réfractaire est du carbure de silicium ou de la fibre de roche.

6. Conduit selon l'une quelconque des revendications précédentes, dans lequel la couche (18) en matériau réfractaire est directement exposée aux gaz s'échappement.

7. Conduit selon l'une quelconque des revendications précédentes, dans lequel la capacité thermique massique du matériau réfractaire est supérieure à 700 J.Kg⁻¹.K⁻¹.

8. Procédé de fabrication d'un conduit d'échappement conforme à l'une quelconque des revendications précédentes, **caractérisé en ce que** ce procédé comprend le dimensionnement (30) de l'épaisseur de la couche en matériau réfractaire en fonction :
- d'une durée maximale de surchauffe contre laquelle on souhaite protéger la zone à protéger de l'enveloppe métallique,
- d'un seuil prédéterminé que la température de l'enveloppe métallique ne doit pas dépasser dans la zone à protéger à l'issue de ladite durée maximale de surchauffe, et
- d'un débit maximal des gaz d'échappement dans le conduit d'échappement.

9. Véhicule automobile, **caractérisé en ce** véhicule comprend un conduit d'échappement conforme à l'une quelconque des revendications 1 à 7.

## Claims

1. Exhaust pipe, this pipe comprising:
- a metallic jacket (4) defining the exterior periphery of the exhaust pipe, this metallic jacket having an exterior face and an interior face, turned towards the interior of the exhaust pipe and comprising a zone (10) to be protected, and
- a thermal protector (16; 62) applied on the interior face of the zone (10) of this metallic jacket which is to be protected,
the said thermal protector (16; 62) comprising a layer (18) of refractory material covering the zone which is to be protected, this refractory material having a mass thermal capacity strictly greater than that of the metallic jacket, and the thermal protector (16; 62) comprising a joint (20) interposed between the metallic jacket (4) and the layer (18) of refractory material to prevent any infiltration of exhaust gas between this layer of refractory material and the interior face of the zone of the metallic jacket which is to be protected,
**characterized in that**:
- the zone (10) which is to be protected is solely situated in a bend or in a funnel of the exhaust pipe,
- the metallic jacket also comprises at least one non-protected zone (6, 8) situated in a location where the walls of the metallic jacket are parallel to the direction of flow of the exhaust gases, and
- the thermal protector (16) covers the entire zone which is to be protected, without completely covering the non-protected zone.

2. Pipe according to Claim 1, in which the joint (20) is a sheet of insulating material which covers the entire zone which is to be protected and the thermal conductivity of which is strictly lower than those of the metallic jacket and of the refractory material.

3. Pipe according to Claim 2, in which the insulating material is a polycrystalline or ceramic material in the form of amorphous vitreous material.

4. Pipe according to any one of the preceding claims, in which the layer (18) of refractory material is wedged between the interior face of the metallic jacket (4) and a reverse side (24) of this metallic jacket.

5. Pipe according to any one of the preceding claims, in which the refractory material is silicon carbide or rock wool.

6. Pipe according to any one of the preceding claims, in which the layer (18) of refractory material is directly exposed to the exhaust gases.

7. Pipe according to any one of the preceding claims, in which the mass thermal capacity of the refractory material is greater than 700 J.Kg⁻¹.K⁻¹.

8. Method for the manufacture of an exhaust pipe according to any one of the preceding claims, **characterized in that** this method comprises the dimensioning (30) of the thickness of the layer of refractory material as a function:
- of a maximum duration of overheating against which one wishes to protect the zone to be protected of the metallic jacket,
- of a predetermined threshold which the temperature of the metallic jacket must not exceed in the zone to be protected after the said maximum duration of overheating, and
- of a maximum flow of exhaust gases in the exhaust pipe.

9. Motor vehicle, **characterized in that** this vehicle comprises an exhaust pipe in accordance with any one of Claims 1 to 7.

## Patentansprüche

1. Abgasleitung, wobei diese Leitung Folgendes aufweist:
- einen Metallmantel (4), der den Außenumfang der Abgasleitung definiert, wobei dieser Metallmantel eine Außenseite und eine Innenseite, die zum Inneren der Abgasleitung gerichtet ist, und eine zu schützende Zone (10) aufweist, aufweist, und
- einen Wärmeschutz (16; 62), der auf der Innenseite der Zone (10) dieses zu schützenden Metallmantels aufgebracht ist,
wobei der Wärmeschutz (16; 62) eine Schicht (18) aus feuerfestem Material aufweist, das die zu schützende Zone bedeckt, wobei dieses Material eine spezifische Wärmekapazität hat, die streng größer ist als die des Metallmantels und wobei der Wärmeschutz (16; 62) eine Dichtung (20) aufweist, die zwischen den Metallmantel (4) und die Schicht (18) aus Feuerfestmaterial eingefügt ist, um jedes Eindringen von Abgas zwischen diese Schicht aus Feuerfestmaterial und die Innenseite der zu schützenden Zone des Metallmantels zu verhindern,
**dadurch gekennzeichnet, dass**:
- die zu schützende Zone (10) nur in einem Winkelstück oder in einem Trichter der Abgasleitung liegt,
- der Metallmantel auch mindestens eine ungeschützte Zone (6, 8) aufweist, die sich an einer Stelle befindet, an der die Wände des Metallmantels zu der Fließrichtung der Abgase parallel sind, und
- der Wärmeschutz (16) die gesamte zu schützende Zone abdeckt, ohne die ungeschützte Zone komplett abzudecken.

2. Leitung nach Anspruch 1, bei der die Dichtung (20) eine Lage aus isolierendem Werkstoff ist, die die ganze zu schützende Zone abdeckt und deren Wärmeleitfähigkeit streng niedriger ist als die des Metallmantels und die des Feuerfestmaterials.

3. Leitung nach Anspruch 2, bei der der isolierende Werkstoff ein polykristalliner Werkstoff oder Keramikwerkstoff in amorpher glasartiger Form ist.

4. Leitung nach einem der vorhergehenden Ansprüche, bei der die Schicht (18) aus Feuerfestmaterial zwischen die Innenseite des Metallmantels (4) und einen Rand (24) dieses Metallmantels geklemmt ist.

5. Leitung nach einem der vorhergehenden Ansprüche, bei der das Feuerfestmaterial Siliziumkarbid oder Gesteinsfaser ist.

6. Leitung nach einem der vorhergehenden Ansprüche, bei der die Schicht (18) aus Feuerfestmaterial den Abgasen direkt ausgesetzt ist.

7. Leitung nach einem der vorhergehenden Ansprüche, bei der die spezifische Wärmekapazität des Feuerfestmaterials größer ist als 700 J.kg⁻¹.K⁻¹.

8. Herstellungsverfahren einer Abgasleitung nach einem der vorhergehenden Ansprüche, **dadurch gekennzeichnet, dass** dieses Verfahren die Bemaßung (30) der Stärke der Schicht aus Feuerfestmaterial umfasst, abhängig von:
- einer maximalen Überhitzungsdauer, vor der man die zu schützende Zone des Metallmantels schützen will,
- einem vorbestimmten Schwellenwert, den die Temperatur des Metallmantels in der zu schützenden Zone nach der maximalen Überhitzungsdauer nicht überschreiten darf, und
- einem maximalen Durchsatz der Abgase in der Abgasleitung.

9. Kraftfahrzeug, **dadurch gekennzeichnet, dass** dieses Kraftfahrzeug eine Abgasleitung nach einem der Ansprüche 1 bis 7 aufweist.
